# EUROPEAN PATENT APPLICATION

(11) **EP 2 134 088 A1**
(43) Date of publication of application: **16.12.2009**
(21) Application number: 08738825.2
(22) Date of filing: 25.03.2008
(51) Int. Cl.: H04N 5/91, H04N 5/225

(54) **IMAGE PROCESSING DEVICE**

(30) Priority: 27.03.2007 JP 2007082692; 08.08.2007 JP 2007206521; 03.09.2007 JP 2007228401
(71) Applicant: Sanyo Electric Co., Ltd., Osaka 570-8677 (JP)
(72) Inventor: SHIOJI, Masahiro, Moriguchi-shi Osaka (JP)
(74) Representative: Kenrick, Mark Lloyd
(86) International application number: PCT/JP2008/055530
(87) International publication number: WO 2008/123228

(57) **Abstract**

An image processing device capable of easily editing image files accumulated in a recording medium is provided.

The image processing device of this invention is **characterized by** comprising playback means configured to play back in a predetermined order plural image information pieces selected from plural image information pieces recorded in a recording medium, image displaying means configured to display played back images corresponding to the image information pieces played back by the playback means in an arrangement corresponding to the predetermined order, additional image selecting means configured to arbitrarily select an additional played back image to be added to the plural played back images displayed by the image displaying means from the image information pieces recorded in the recording medium, and designating means configured to dispose a pointer displaceably to a position between arbitrary two adjacent played back images of the plural played back images displayed by the image displaying means and designating adding position of the additional played back image by the pointer position.

## Description

### FIELD OF THE INTENTION

The present invention relates to an image processing device having an edit function of editing a taken image.

### DESCRIPTION OF RELATED ART

Conventionally, known is an image print processing device displaying a plurality of image data in an arrangement on a monitor and rearranging the data (For example, see Japanese Laid-Open Patent Publication No. 2006-246120).

### DISCLOSURE OF THE INVENTION

### PROBLEMS TO BE SOLVED BY THE INVENTION

In the image print processing device described above, the rearranging process of a plurality of images arranged and displayed on the monitor is realized by clicking with a mouse a function button ("replace" button) for designating and replacing two images which a user wants to move with each other.

For example, five images A, B, C, D and E are arranged on the monitor in the order from left to light. In the case where the image A is to be moved to a position between C and D to rearrange the images to B, C, A, D, E using the image print processing device described above, first, the images A and C are designated and the "replace" button is clicked to replace the images A and C with each other. Then, the images are displayed in the order of C, B, A, D, E from left. Next, the images C and B are designated and the "replace" button is clicked to replace the images C and B with each other. Then, the images are displayed in the order of B, C, A, D, E from left. Thus, in order to rearrange images, many times images to be replaced must be designated and the "replace" button must be clicked. And such operation was very bothersome for users. Also, the patent document 1 mentioned above does not disclose addition of a new image to the plurality of images arranged and displayed on the monitor.

The present invention is to solve the above described problems and provide an image processing device capable of editing a plurality of images recorded in a memory in a way easy to understand for users and with easy operations.

### MEANS FOR SOLVING THE PROBLEM

An image processing device according to the present invention is characterized by comprising playback means configured to play back in a predetermined order a plurality of image information pieces selected from a plurality of image information pieces recorded in a recording medium, image displaying means configured to display played back images corresponding to the image information pieces played back by the playback means in an arrangement corresponding to the predetermined order, additional image selecting means configured to arbitrarily select an additional played back image to be added to the plurality of played back images displayed by the image displaying means from the image information pieces recorded in the recording medium, and designating means configured to dispose a pointer displaceably to a position between arbitrary two adjacent played back images of the plurality of played back images displayed by the image displaying means and designating an adding position of the additional played back image by a position of the pointer.

According to this image processing device, the plurality of played back images corresponding to the plurality of image information pieces recorded in the recording medium are displayed in the arrangement corresponding to the order of being played back. When a new played back image is to be added to the plurality of played back images, the pointer is disposed displaceably to a position between arbitrary two adjacent played back images as an adding position. Therefore, the user can visually recognize that the played back image is to be added at the position the pointer is indicating, thereby realizing good usability.

Another image processing device according to the present invention is characterized by comprising playback means configured to play back in a predetermined order a plurality of image information pieces selected from a plurality of image information pieces recorded in a recording medium, image displaying means configured to display played back images corresponding to the image information pieces played back by the playback means in an arrangement corresponding to the predetermined order, image selecting means configured to select a displacement object played back image which is an object of change of displaying position of the plurality of played back images displayed by the image displaying means, and designating means configured to dispose a pointer displaceably to a position between arbitrary two adjacent played back images of the plurality of played back images displayed by the image displaying means and designating a movement destination of the displacement object played back image by a position of the pointer.

According to this image processing device, the plurality of played back images corresponding to the plurality of image information pieces recorded in the recording medium are displayed in the arrangement corresponding to the order of being played back. When a position of the arranged played back image is to be changed, the pointer is disposed displaceably to a position between arbitrary two adjacent played back images as a changed position. Therefore, the user can visually recognize that the played back image is to be moved to the position the pointer is indicating, thereby realizing good usability.

In a particular configuration, the image processing device described above further comprises inputting means configured to input an image information piece, and recording means configured to record the image information piece inputted by the inputting means in the recording medium.

According to this particular configuration, the image processing device itself can input the image information piece and record the image information piece in the recording medium, and therefore, an outside image inputting device for inputting the image information piece from outside is not necessary, thereby realizing a compact shape.

Further in particular, in the image processing device described above, the recording medium is a removable external recording medium.

According to this particular configuration, when used by the user, the external recording medium alternatively selected from a plurality of external recording mediums can be used, and therefore, the adding or moving processing described above can be performed using the image information piece of the external recording medium on which the user's desired image information piece is recorded.

An image processing system according to the present invention consists of the image processing device of the present invention described above and the external recording medium connected to each other via an interface, and the image information piece is transmitted from the image processing device to the external recording medium via the interface.

### EFFECT OF THE INVENTION

According to the image processing device of the present invention, when performing rearranging a plurality of images, or when adding another image, it is possible to indicate where in the plurality of currently arranged images to place the image which are desired to be moved in a way easy to understand, and such editing can be conducted with easy operation.

### BEST MODE FOR CARRYING OUT THE INVENTION

An embodiment in which the present invention is implemented in a digital camera is described in detail with reference to drawings.

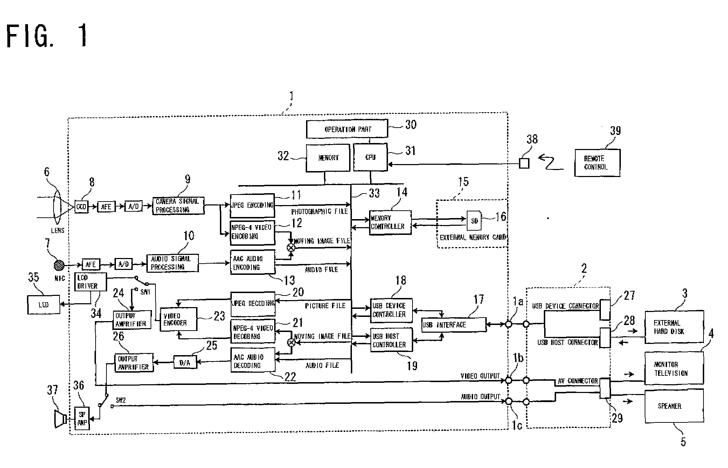

As shown in Fig. 1, a digital camera of the present invention has a camera body 1 including: an operation part 30; a CPU 31 for performing various control procedures in response to an operation signal from the operation part 30; and a memory 32 into which a control procedure to be performed by the CPU 31 is written. The CPU 31 and the memory 32 are connected to a bus 33.

In the camera body 1, image signal light from an optical system 6 is converted to an electric signal in a CCD 8. The electric signal is A/D converted, and is supplied thereafter to a JPEG encoding circuit 11 and to an MPEG-4 video encoding circuit 12. An audio signal from a microphone 7 is A/D converted, and is supplied thereafter to an AAC audio encoding circuit 13.

The JPEG encoding circuit 11 has an output terminal connected to the bus 33, and creates a photographic file under control of the CPU 31. The MPEG-4 video encoding circuit 12 and the AAC audio encoding circuit 13 have output terminals connected to the bus 33, and create a moving image file and an audio file under control of the CPU 31.

The created photographic file is supplied through the bus 33 to a JPEG decoding circuit 20. The created moving image file is supplied through the bus 33 to an MPEG-4 video decoding circuit 21 and to an AAC audio decoding circuit 22. The created audio file is supplied to the MPEG-4 video encoding circuit 12.

The outputs of the JPEG decoding circuit 20 and the MPEG-4 video decoding circuit 21 are converted to image data in a video encoder 23. The image data is then passed to a changeover switch SW1 and an output amplifier 24, and is thereafter output to an image output terminal 1b. The image data is also passed to an LCD driver 34, and is thereafter output to a liquid crystal display 35 by the switching of the changeover switch SW1. The output of the AAC audio decoding circuit 22 is converted to an audio signal in a D/A conversion circuit 25. The audio signal is then passed to an output amplifier 26 and a changeover switch SW2, and is thereafter output to an audio output terminal 1c. The audio signal is also passed to the output amplifier 26 and a speaker amplifier 36, and is thereafter output to a speaker 37 by the switching of the changeover switch SW2.

The camera body 1 has a card drive 15 to and from which an external memory card 16 such as an SD card can be attached and detached. A memory controller 14 is placed between the card drive 15 and the bus 33.

Further, the camera body 1 is provided with a USB terminal 1a. A USB interface 17 is connected to the USB terminal 1a, and a USB device controller 18 and a USB host controller 19 are interposed in parallel with each other between the USB interface 17 and the bus 33.

A cradle 2 can be connected to the USB terminal 1a, to the image output terminal 1b, and to the audio output terminal 1c of the camera body 1. The cradle 2 is provided with a USB device connector 27 and a USB host connector 28 to be connected in parallel relation to the USB terminal 1a, and an AV connector 29 to be connected to the image output terminal 1b and to the audio output terminal 1c.

An external hard disk drive 3 can be connected to the USB host connector 28 of the cradle 2. A monitor television receiver 4 and a speaker 5 can be connected to the AV connector 29.

The camera body 1 is provided with a light receiving part 38. The light receiving part 38 receives an infrared signal from a remote controller 39 and supplies the received signal to the CPU 31, thereby allowing remote control operation.

### 1. Recording into and playback from external memory card 16

In the digital camera of the present invention shown in Fig. 1, a photographic file, a moving image file and an audio file created by shooting can be written into the external memory card 16 under control of the memory controller 14 of the camera body 1.

The photographic file written in the external memory card 16 is thereafter read under control of the memory controller 14. The read photographic file is supplied to the JPEG decoding circuit 20 to obtain image data from the output amplifier 24. The image data is then supplied from the cradle 2 to the monitor television receiver 4, so that a still image can be played back.

The moving image file written in the external memory card 16 is read under control of the memory controller 14. The read moving image file is supplied to the MPEG-4 video decoding circuit 21 and to the AAC audio decoding circuit 22 to obtain image data and an audio signal from the output amplifiers 24 and 26. The image data and the audio signal are then supplied from the cradle 2 to the monitor television receiver 4, so that moving images can be played back.

The audio file written in the external memory card 16 is read under control of the memory controller 14. The read audio file is supplied to the AAC audio decoding circuit 22 to obtain an audio signal from the D/A conversion circuit 25. The audio signal is then supplied from the cradle 2 to the speaker 5, so that a sound can be played back.

### 2. Recording into external hard disk drive 3

A photographic file obtained from the JPEG encoding circuit 11 of the camera body 1 is output through the USB interface 17 to the USB terminal 1a under control of the USB host controller 19. The output photographic file is then supplied from the USB host connector 28 of the cradle 2 to the external hard disk drive 3, so that a still image can be recorded in the external hard disk drive 3.

A moving image file obtained from the MPEG-4 video encoding circuit 12 and the AAC audio encoding circuit 13 of the camera body 1 is output through the USB interface 17 to the USB terminal 1a under control of the USB host controller 19. The output moving image file is then supplied from the USB host connector 28 of the cradle 2 to the external hard disk drive 3, so that moving images can be reworded in the external hard disk drive 3.

An audio file obtained from the AAC audio encoding circuit 13 of the camera body 1 is output through the USB interface 17 to the USB terminal 1a under control of the USB host controller 19. The output audio file is then supplied from the USB host connector 28 of the cradle 2 to the external hard disk drive 3, so that a sound can be recorded in the external hard disk drive 3.

### 3. Data transmission from external memory card 16 to external hard disk drive 3

A file is read from the external memory card 16 under control of the memory controller 14 of the camera body 1. The read file is output through the USB interface 17 to the USB terminal 1a under control of the USB host controller 19, and is then supplied from the USB host connector 28 of the cradle 2 to the external hard disk drive 3. As a result, the file can be recorded in the external hard disk drive 3.

### 4. Writing back from external hard disk drive 3 to external memory card 16

Under control of the USB host controller 19 of the camera body 1, a specific file stored in the external hard disk drive 3 is read, passed to the cradle 2, and loaded into the USB interface 17 of the camera body 1. The file obtained from the USB interface 17 can be written back to the external memory card 16 under control of the memory controller 14.

### 5. Playback from external hard disk drive 3

Under control of the USB interface 17 of the camera body 1, a specific photographic file stored in the external hard disk drive 3 is passed to the cradle 2, and is then loaded into the USB interface 17 of the camera body 1. The file obtained from the USB interface 17 is supplied to the JPEG decoding circuit 20 to obtain image data from the output amplifier 24. The image data is passed to the cradle 2, and is then supplied to the monitor television receiver 4, so that a still image can be played back.

Under control of the USB interface 17 of the camera body 1, a specific moving image file stored in the external hard disk drive 3 is passed to the cradle 2, and is then loaded into the USB interface 17 of the camera body 1. The file obtained from the USB interface 17 is supplied to the MPEG-4 video decoding circuit 21 and to the AAC audio decoding circuit 22 to obtain image data and an audio signal from the output amplifiers 24 and 26. The image data and the audio signal are passed to the cradle 2, and are then supplied to the monitor television receiver 4 and the speaker 5, so that moving images can be played back.

Under control of the USB interface 17 of the camera body 1. a specific audio file stored in the external hard disk drive 3 is passed to the cradle 2, and is then loaded into the USB interface 17 of the camera body 1. The file obtained from the USB interface 17 is supplied to the AAC audio decoding circuit 22 to obtain an audio signal from the output amplifier 26. The audio signal is passed to the cradle 2, and is then supplied to the speaker 5, so that a sound can be played back.

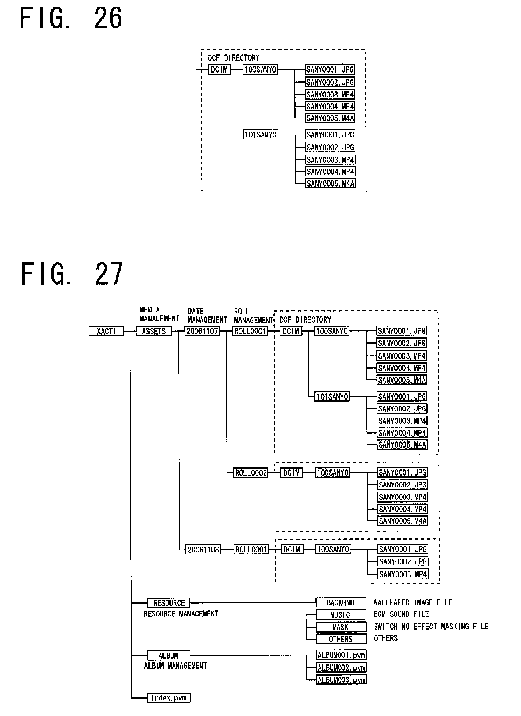

Fig. 26 shows a directory structure of files written in the external memory card 16 that employs the DCF standard. Fig. 27 shows a directory structure of files stored in the external hard disk drive 3.

As shown in Fig. 26, the DCF directory includes a folder "DCIM" placed in the root directory, and lower-level folders "100SANYO" to "999SANYO" that contain files of still images and moving images ("SANY0001" to "SANY9999").

As shown in Fig. 27, the directory structure formed in the external hard disk drive 3 includes DCF directories in the lowest level each employing the directory structure formed in the external memory card 16 in its entirety. Roll management folders "ROLL001," "ROLL0002," each of which is given a roll number with each DCF directory regarded as a unit, are created in a level higher than that of the DCF directories.

In transmission of files to the external hard disk drive 3, a date management folder containing the date of transmission is newly created in a level higher than that of the roll management folders, and two or more rolls with the same date are transmitted to the same date management folder. A date management folder with a different date is newly created as a date changes.

Further, a media management folder is created in a level higher than that of the date management folders. A resource management folder, an album management folder, and an index file are created to be in parallel with the media management folder.

A wallpaper image file, a BGM sound file, a switching effect masking file, and others are created in the resource management folder. Album files for setting the order of files to be played back, for setting the display period of still images, for setting switching effect, and for setting BGM are created in the album management folder.

The DCF directory structures formed in the external memory card 16 and the external hard disk drive 3 described above allow a DCF directory to be maintained in data transmission between the external memory card 16 and the external hard disk drive 3. This provides extremely satisfactory access performance of files.

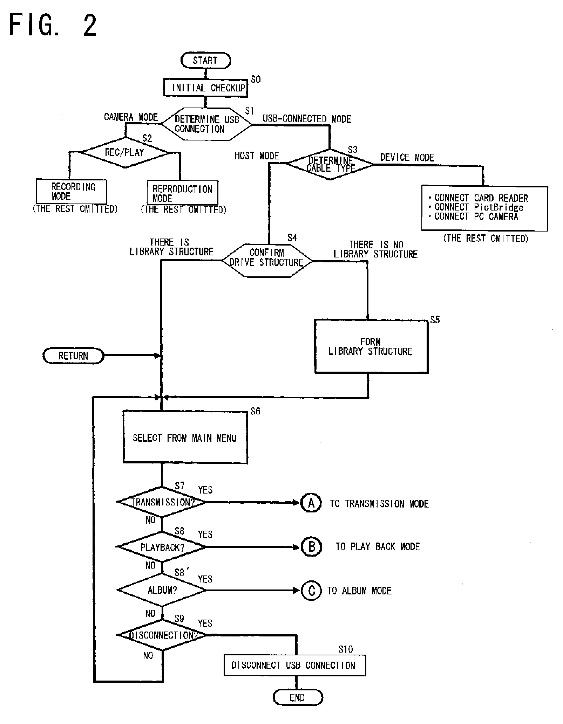

Figs. 2 to 22 explain control procedures performed by the CPU 31 when an SD card is employed as the external memory card 16.

Fig. 2 explains a basic flow. First, in step S0, an initial checkup is conducted after startup to find a remaining battery level., the available space of the SD card, and the like. Thereafter the presence or absence of a USB cable being connected is determined in step S1. In a camera mode in which a USB cable is not connected, determination is made between a recording mode and a playback mode in step S2. Then, a mode setting is performed according to its result.

In contrast, in a USB-connected mode in which a USB cable is connected, the type of the cable is determined in step S3. If the cable is judged to be a USB host cable to which an external hard disk drive is connected, a drive structure is checked up in step S4. If there is no library structure, a library structure is formed in step S5, and the flow thereafter goes to step S6.

In step S6, selection is made from a main menu of four items TRANSMISSION, PLAYBACK, ALBUM, and DISCONNECTION. If TRANSMISSION is selected, the flow passes through step S7 to go to a transmission mode. If PLAYBACK is selected, the flow passes through step S8 to go to a playback mode. If ALBUM is selected, the flow passes through step S8' to go to an album mode. If DISCONNECTION is selected, the USB connection is disconnected in step S10, and then the procedure is completed.

### (Transmission mode)

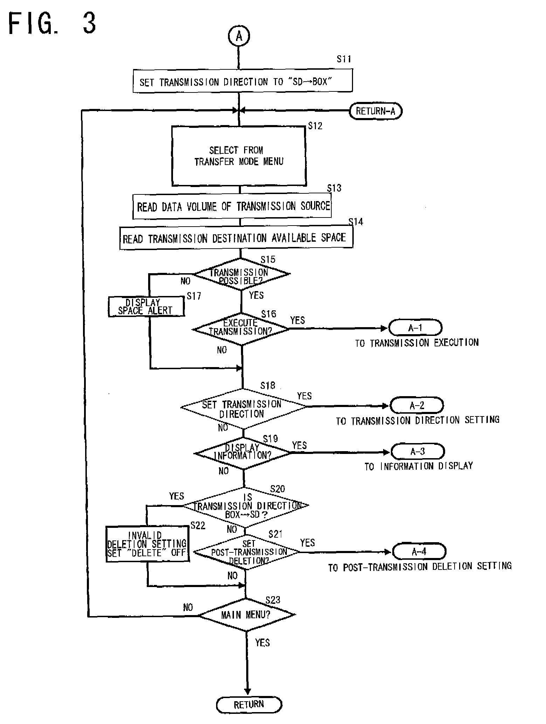

In the transmission mode, as shown in Fig. 3, a transmission direction is set to default "FROM SD (SD card) TO BOX (external hard disk drive)" in step S11. Thereafter in step S12, selection is made from a menu of four transmission modes TRANSMISSION EXECUTION, TRANSMISSION DIRECTION SETTING, INFORMATION DISPLAY, and MAIN MENU. The data volume of a transmission source is read in step S13, and the space of a transmission destination is read in step S14. Next, it is determined in step S15 whether or not transmission is possible. If transmission is impossible, a warning about space is displayed in step S17.

If transmission is possible, it is determined in step S18 whether or not TRANSMISSION EXECUTION was selected. If its result is YES, the flow goes to TRANSMISSION EXECUTION. Further, it is determined in step S19 whether or not INFORMATION DISPLAY was selected. If its result is YES, the flow goes to TRANSMISSION DIRECTION SETTING. Still further, it is determined in step S20 whether or not the transmission direction is "FROM BOX TO SD." If its result is NO, it is determined in step S21 whether or not POST-TRANSMISSION DELETION SETTING should be performed. If its result is YES, the flow goes to POST-TRANSMISSION DELETION SETTING. If a result of step S21 is NO, the flow goes to step S23.

If a result of step S20 is YES, deletion setting is invalidated in step S22, and the flow thereafter goes to step S23.

It is determined in step S23 whether or not the main menu should be displayed. If its result is NO, the flow returns to step S12. If its result is YES, the flow returns to step S6 of Fig. 2.

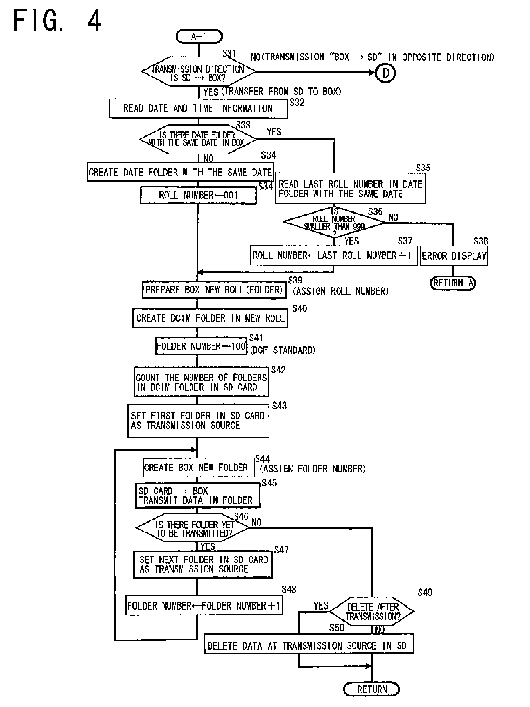

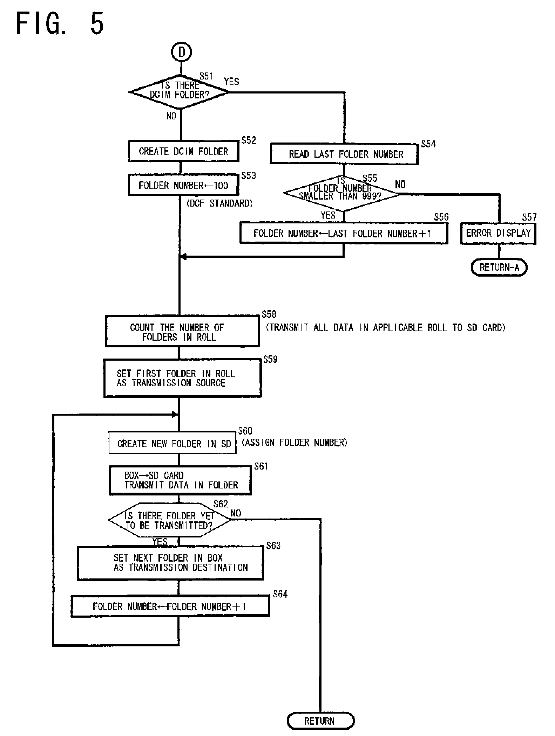

In TRANSMISSION EXECUTION, as shown in Fig. 4, it is determined in step S31 whether a transmission direction is "FROM SD TO BOX." If its result is NO, the flow goes to step S51 of Fig. 5.

In contrast, if a result of step S31 of Fig. 4 is YES, the flow goes to step S32 in which date and time information is read. Then, it is determined in step S33 whether the BOX contains a date folder with the same date. If its result is NO, a date folder with this date is created in step S34, and a roll number is set to "001" in step S34'.

In contrast, if a result of step S33 is YES, the flow goes to step S35 in which the last roll number is read from the date folder with the same date. Then, it is determined in step S36 whether or not the read roll number is at or below "999". If a result of step S36 is NO, an error is displayed in step S38. Thereafter the flow returns to step S12 of Fig. 3. In contrast, if a result of step S36 of Fig. 4 is YES, 1 is added to the last roll number in step S37, and a result thereby obtained is employed as a roll number.

Next, a new roll management folder given the roll number is created in the BOX in step S39, and a DCIM folder is created in the new roll in step S40. Then, a folder number is set to "100" according to the DCF standard in step S41, the number of folders in a DCIM folder in the SD card is counted in step S42, and the first folder in the SD card is set as a transmission source in step S43.

Thereafter, a new folder given the folder number is created in the BOX in step S44, and data in the folder is transmitted from the SD card to the BOX in step S45. Next, it is determined in step S46 whether or not there is a folder yet to be transmitted. If its result is YES, the flow goes to step S47 in which a next folder in the SD card is set as a transmission source. Then, a folder number is counted up in step S48.

In contrast, if a result of step S46 is NO, it is further determined in step S49 whether the data should be deleted after transmission. If its result is YES, the data in the SD card as a transmission source is deleted in step S50, and the flow thereafter returns to step S6 of Fig. 2.

If a result of step S31 of Fig. 4 is NO, it is first determined in step S51 of Fig. 5 whether or not there is a DCIM folder. If its result is NO, a DCIM folder is created in step S52, and then a folder number is set to "100" in step S53.

If a result of step S51 is YES, the last folder number is read in step S54. Then, it is determined in step S55 whether or not the read folder number is at or below "999". If its result is NO, an error is displayed in step S57. Thereafter the flow returns to step S12 of Fig. 3.

In contrast, if a result of step S55 of Fig. 5 is YES, 1 is added to the last folder number in step S56, and a result thereby obtained is employed as a folder number.

Next, the number of folders in a roll is counted in step S58, and the first folder in the roll is set as a transmission source in step S59. Thereafter, a new folder given the folder number is created in the SD card in step S60, and data in the folder is transmitted from the BOX to the SD card in step S61.

Next, it is determined in step S62 whether or not there is a folder yet to be transmitted. If its result is YES, a next folder in the BOX is set as a transmission source in step S63. Thereafter a folder number is counted up in step S64, and then the flow returns to step 60. If a next result of step S62 is NO, the flow returns to step S6 of Fig. 2.

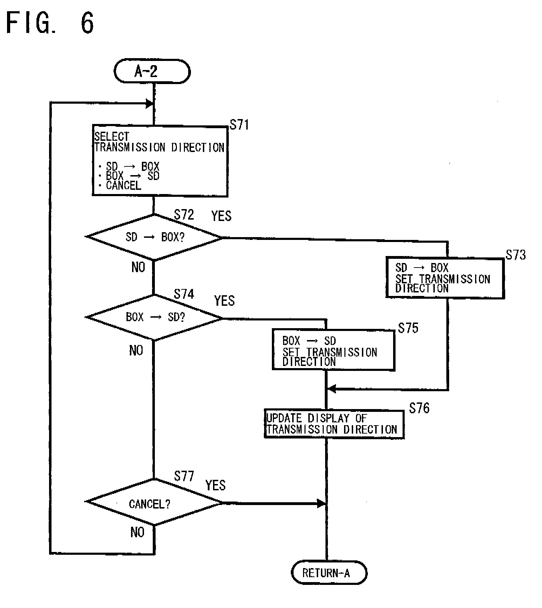

In TRANSMISSION DIRECTION SETTING, a transmission direction is selected from "FROM SD TO BOX," "FROM BOX TO SD," and "CANCEL" in step S71 of Fig. 6. If "FROM SD TO BOX" is determined in step S72, the flow goes to step S73 in which the transmission direction is set to "FROM SD TO BOX." If "FROM BOX TO SD" is determined in step S74, the flow goes to step S75 in which the transmission direction is set to "FROM BOX TO SD."

After the display of a transmission direction is updated in step S76, the flow returns to step S12 of Fig. 3.

In contrast, if "CANCEL" is determined in step S74 of Fig. 6, it is determined in step S77 whether or not canceling should be performed. If its result is NO, the flow returns to step S71. If its result is YES, the flow returns to step S12 of Fig. 3.

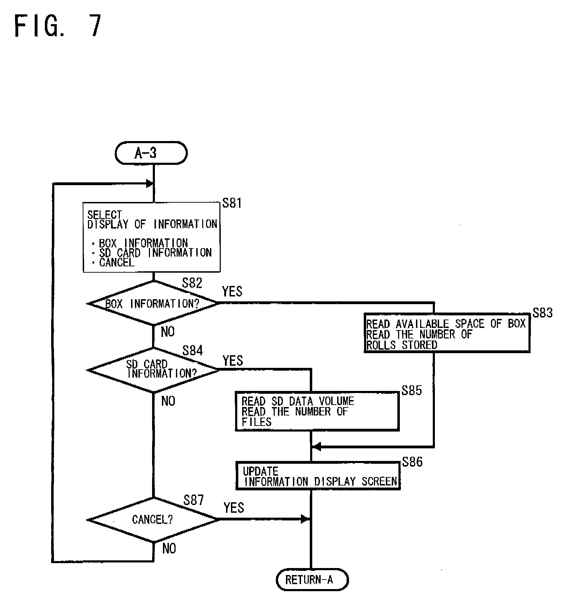

In INFORMATION DISPLAY, display of information is selected from "BOX INFORMATION," "SD CARD INFORMATION," and "CANCEL" in step S81 of Fig. 7. If "SBOX INFORMATION" is determined in step S82, the flow goes to step S83 in which the available space of the BOX and the number of rolls stored are read. If "SD CARD INFORMATION" is determined in step S84, the flow goes to step S85 in which SD data volume and the number of files are read.

Next, an information display screen is updated in step S86, and the flow thereafter returns to step S12 of Fig. 3.

In contrast, if "CANCEL" is selected in step S84 of Fig. 7, it is determined in step S87 whether or not canceling should be performed. If its result is NO, the flow returns to step S81. If its result is YES, the flow returns to step S12 of Fig. 3.

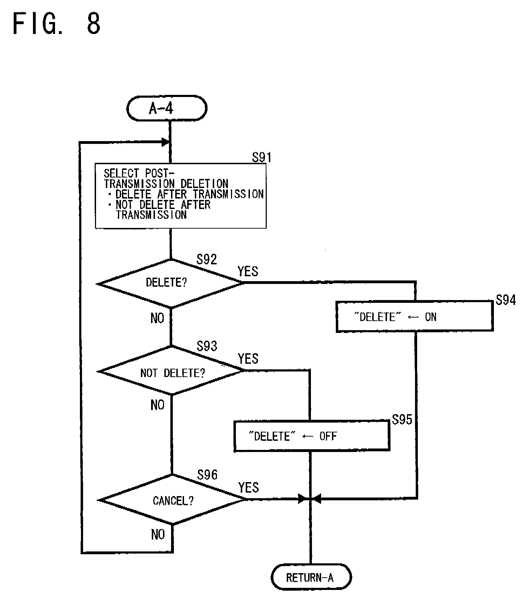

In POST-TRANSMISSION DELETION SETTING, selection is made between "DEPLETE AFTER TRANSMISSION" and "NOT DELETE AFTER TRANSMISSION" in step S91 of Fig. 8. If "DELETE AFTER TRANSMISSION" is determined in step S92, "DELETE" is set ON in step S94. If "NOT DELETE AFTER TRANSMISSION" is determined in step S93, "DELETE" is set OFF in step S95, and then the flow returns to step S12 of Fig. 3.

In contrast, no determination is made in step S93 of Fig. 8, it is determined in step S96 whether or not canceling should be performed. If its result is NO, the flow returns to step S91. If its result is YES, the flow returns to step S12 of Fig. 3.

### (Playback mode)

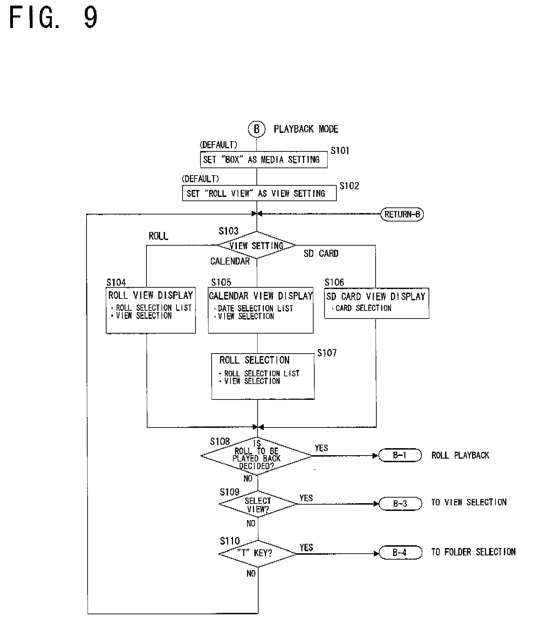

In the playback mode, default "BOX" is set by default as media setting in step S101 of Fig. 9, and "ROLL VIEW" is set as view setting in step S102.

Thereafter in step S103, it is determined which one of "ROLL," "CALENDAR," and "SD CARD" is set in the view setting.

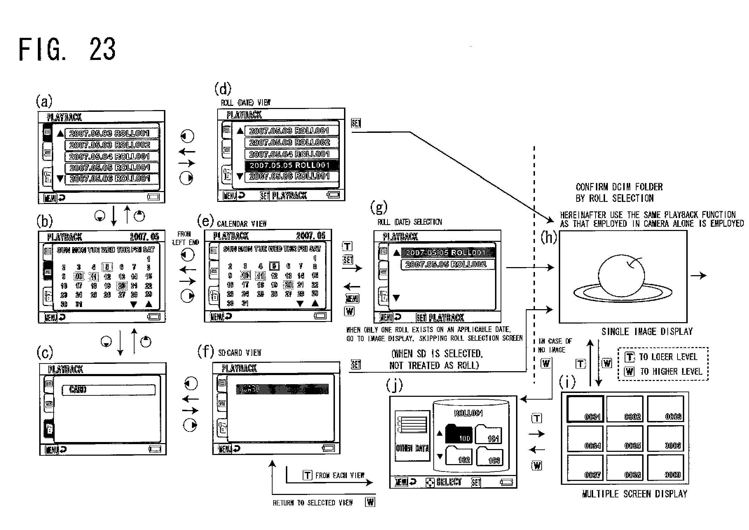

If "ROLL" is set, a roll view display such as a roll selection list and view selection (see Fig. 23(d)) is presented in step S104. If "CALENDAR" is set, a calendar view display such as a date selection list and view selection (see Fig. 23(e)) is presented in step S105. Next, a roll selection display such as a roll selection list and view selection (see Fig. 23(g)) is presented in step S107. If "SD CARD" is set, an SD card view display such as card selection (see Fig. 23(f)) is presented in step S106.

Roll information is thereby read and a selection list is displayed according to each view setting, so that a roll to be played back is specified.

It is determined in step S108 whether or not a roll to be played back is decided. If its result is YES, the flow goes to a roll playback procedure (B-1). Next, it is determined in step S109 whether or not view selection was made. If its result is YES, the flow goes to a view selection procedure (B-3). Further, it is determined in step S110 whether or not a "T" key was operated. If its result is YES, the flow goes to a folder selection procedure (B-4).

If a result of step S110 is NO, the flow returns to step S103 to repeat determination of the view setting.

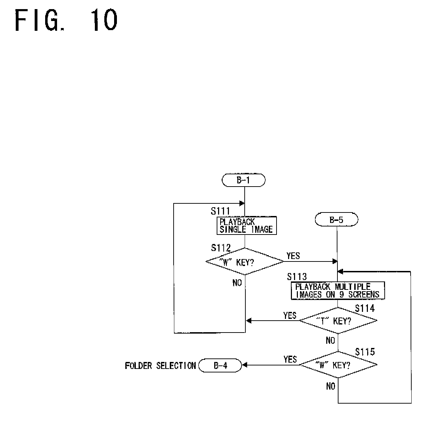

In the roll playback procedure, a single image is played back (see Fig. 23(h)) in step S111 of Fig. 10, and thereafter, it is determined in step S112 whether or not a "W" key was operated. If its result is NO, the flow returns to step S111 to continue the playback of the single image. If a result of step S112 is YES, multiple images are played back on nine screens (see Fig. 23(i)) in step S113.

Then, it is determined in step S114 whether or not the "T" key was operated. If its result is YES, the flow returns to step S111 to play back a single image. If a result of step S114 is NO, the flow goes to step S115 in which it is determined whether or not the "W" key was operated. If its result is No, the flow returns to step S113 to continue the playback of the multiple images on nine screens. If its result is YES, the flow goes to the folder selection (B-4).

As described, in the roll playback, a playback mode incorporated as an original camera function is employed when a roll to be played back is decided.

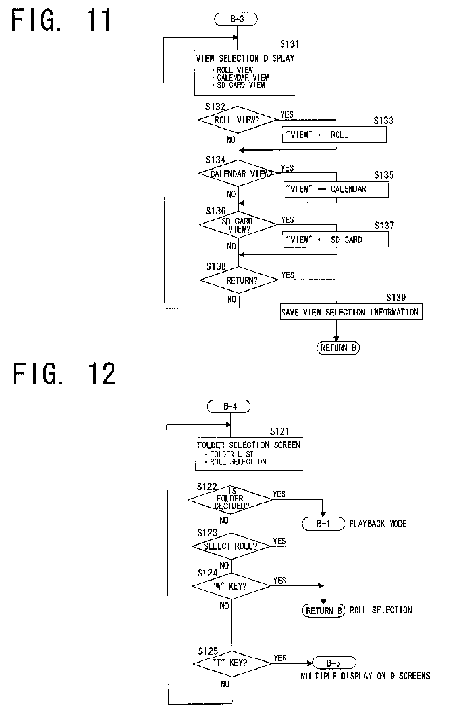

In the view selection procedure, a view selection display for making selection from "ROLL VIEW," "CALENDAR VIEW," and "SD CARD VIEW" (see Figs. 23(a), (b), (c)) is presented in step S131 of Fig. 11. If "ROLL VIEW" is determined in step S132, a roll is set to "VIEW" in step S133. If "CALENDAR VIEW" is determined in step S134, a calendar is set to "VIEW" in step S135. If "SD CARD VIEW" is determined in step S136, an SD card is set to "VIEW" in step S137.

Then, it is determined in step S138 whether or not "RETURN" operation was performed. If its result is NO, the flow returns to step S131 to repeat the view selection display. In contrast, if a result of step S138 is YES, view selection information is saved in step S139. Thereafter the flow returns to step S103 of Fig. 9.

In the folder selection procedure, a folder selection screen including a list of folders and a roll selection image (see Figs. 23 (j)) is displayed in step S121 of Fig. 12. Next, it is determined in step S122 whether or not a folder to be played back is decided. If its result is YES, the flow goes to the playback mode (B-1).

If a result of step S122 is NO, the flow goes to step S123 in which it is determined whether or not an operation for roll selection was performed. If its result is YES, the flow returns to step S103 of Fig. 9 to perform roll selection.

If a result of step S123 is NO, the flow goes to step S124 in which it is determined whether or not the "W" key was operated. If its result is YES, the flow returns to step S103 of Fig. 9 to perform roll selection.

In contrast, if a result of step S124 is NO, the flow goes to step S125 in which it is determined whether or not the "T" key was operated. If its result is NO, the flow returns to step S121 to repeat the display of the folder selection screen. If its result is YES, the flow goes to step S113 of Fig. 10 in which multiple images are played back on nine screens.

Fig. 23 shows transitions of a series of display screens in response to operations when "PLAYBACK" is selected from "DATA TRANSMISSION", "PLAYBACK", and "ALBUM" on the main menu.

After the main menu is displayed, a roll (date) view of Fig. 23(d) is displayed. In the roll (date) view, a roll number and a date are displayed as a pair. When one roll is selected from this view, a predetermined single file contained in the selected roll (such as the last file in the last folder) is played back and then displayed as shown in (h).

A target of display can be switched to a next file by operating an image-feed key, with one file displayed as shown in (h). A target of display can be switched among folders. If a target of display is to be switched to a different roll, a roll is selected first.

When the image-feed key is operated leftward with the roll (date) view of (h) displayed, a roll (date) view switching screen of (a) appears. When the image-feed key is further operated downward with this screen displayed, a calendar view switching screen shown of (b) appears. When the image-feed key is operated rightward in this state, a calendar view of (e) appears.

In the calendar view, those dates on which rolls exist are marked in the calendar. When one date is selected from these dates, all rolls with the selected date are displayed in list form as shown in (g). When one roll is selected in this state, a predetermined single file contained in the selected roll (such as the last file in the last folder) is played back and then displayed as shown in (h).

When the image-feed key is operated downward with the calendar view switching screen of (b) displayed, an SD card view switching screen of (c) appears. When the image-feed key is operated rightward in this state, an SD card view of (f) appears.

In the SD card view, an indication that a card is a target of playback is displayed. When a card is selected in this state, a predetermined single file contained in the selected card (such as the last file in the last folder) is played back and then displayed as shown in (h).

When the "T" key is operated with the roll view of (d), with the calendar view of (e), or with the SD card view of (f) displayed, a folder selection screen shown in (j) appears. When one folder is selected therefrom and then the "T" key is operated, a plurality of files contained in the selected folder are displayed on multiple screens as shown in (i). When one file is selected therefrom and then the "T" key is operated, the selected file is played back and then displayed as shown in (h).

When the "W" key is operated with one file displayed as shown in (h), multiple screens of a folder containing the displayed file is displayed as shown in (i). When the "W" key is further operated in this state, a folder selection screen of a roll containing this folder is displayed as shown in (j).

When the "W" key is further operated in this stare, the roll view of (d), the calendar view of (e), or the SD card view of (f) is displayed again.

As described, a predetermined single file can directly be displayed as shown in (h) only by selecting one roll in the roll (date) view of Fig. 23(d). Then, display is switched to a next image in this state, so that a desirable single image can be displayed. Or, after a roll is selected on the roll (date) view of Fig. 23(d), a folder is selected on the folder selection screen of (j), and a file is selected on the display of multiple screens of (i), a desirable single file can finally be displayed as shown in (h).

Thus, a user can select a preferable way from these two ways of file display.

### (Album mode)

In the album mode, the user arbitrarily selects a still image file (for example, SANY0001.JPG) or a moving image file (for example, SANY0003.MP4) recorded in the DCF directory shown in FIG. 27, and a link information file (for example, ALBUM001.pvm) is prepared in an ALBUM folder based on the address of the selected still image file or moving image file. The user designates the link information file to be played back, whereby the selected still image file or moving image file can be played back in a predetermined order.

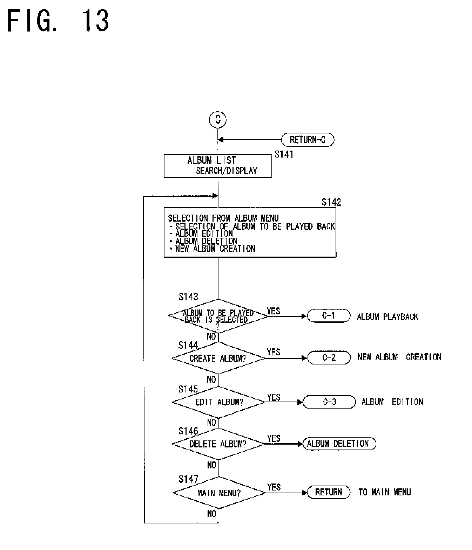

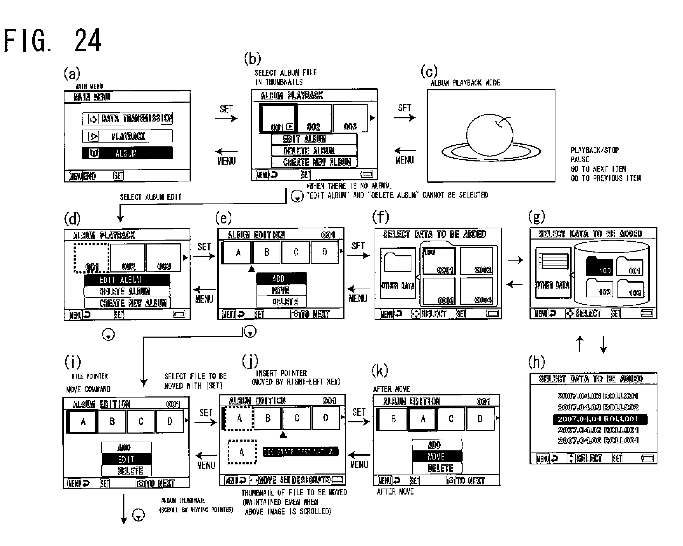

In the album mode, a list of album files already created is searched first, and a result thereof is displayed in step S141 of Fig. 13. Next, in step S142, an album menu is displayed on which it is determined whether an album to be played back should be selected from the album list, whether an album should be edited (changed), whether an album should be deleted, or whether an album should be newly played back (see Fig. 24(b)).

If an album to be played back is selected, the flow goes to an album playback procedure (C-1) in step S143. If NEW ALBUM CREATION is selected, the flow goes to a new album creation procedure (C-2) in step S144. If ALBUM EDITION is selected, the flow goes to an album edition procedure (C-3) in step S145. If ALBUM DELETION is selected, the flow goes to an album deletion procedure (album deletion) in step S146. If MAIN MENU is selected, the main menu is displayed again in step S147.

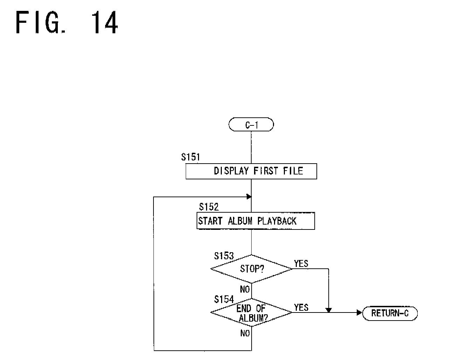

In ALBUM PLAYBACK, the first file in an album is displayed in step S151 of Fig. 14, and thereafter, playback of the album is started in step S152. Then, it is determined in step S153 whether or not an operation for stopping the album playback was performed. If its result is YES, the flow returns to step S141 of Fig. 13 in which the search of the album list and display are performed.

If a result of step S153 of Fig. 14 is NO, the flow goes to step S154 in which it is determined whether or not the album has been played back to the end. If its result is YES, the flow returns to step S141 of Fig. 13 in which the search and display of the album list are performed.

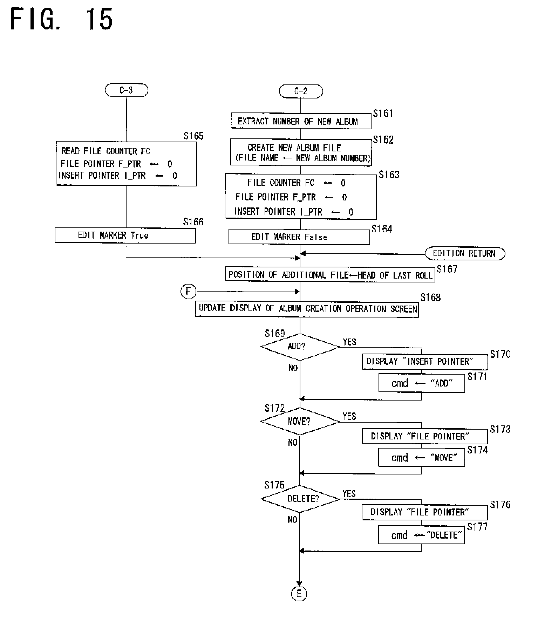

In NEW ALBUM CREATION, after the number of a new album is extracted in step S161 of Fig. 15, the new album is created while being given the new album number as its file name in step S162. Next, a file counter FC, a file pointer F_PTR, and an insert pointer I_PTR are each set to zero in step S163, and the flag of an edit marker is set to "False" in step S164. Thereafter the flow goes to step S167.

In ALBUM EDITION, the file counter FC is read, and the file pointer F_PTR and the insert pointer I_PTR are each set to zero in step S165 of Fig. 15. Further, the flag of an edit marker is set to "True" in step S166. Thereafter the flow goes to step S167.

In step S167, the head of the last roll is designated first as a reference position of a file when it is added. Next, the display of an album creation operation screen is updated in step S168. Thereafter it is determined in step S169 whether or not file addition was instructed. If its result is YES, an "insert pointer" described later is displayed in step S170, and "ADD" is thereafter set as a command variable cmd.

Next, it is determined in step S172 whether or not file move was instructed. If its result is YES, a "file pointer" described later is displayed in step S173, and "MOVE" is thereafter set as the command variable cmd.

Further, it is determined in step S175 wether or not file deletion was instructed. If its result is YES, a "file pointer" is displayed in step S176, and "DELETE" is thereafter set as the command variable cmd.

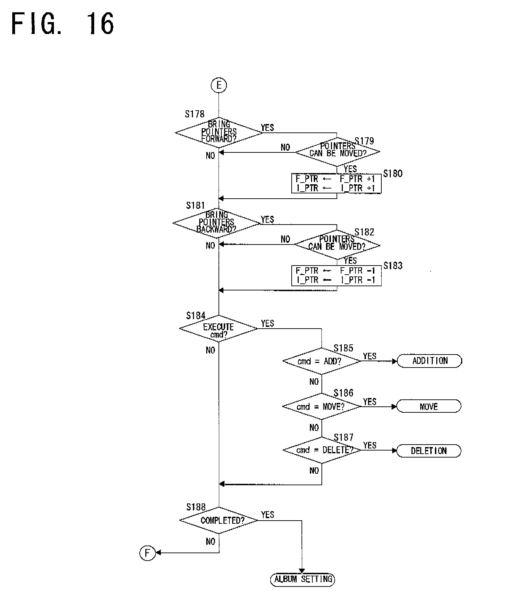

Next, it is determined in step S178 of Fig. 16 whether or not an operation for bringing the pointers forward was performed. If its result is YES, it is determined in step S179 whether or not the pointers can be moved. If its result is YES, the flow goes to step S180 in which the file pointer F_PTR and the insert pointer I_PTR are each counted up by one.

Next, it is determined in step S181 whether or not an operation for bringing the pointers backward was performed. If its result is YES, it is determined in step S182 whether or not the pointers can be moved. If its result is YES, the flow goes to step S183 in which the file pointer F_PTR and the insert pointer I_PTR are each counted down by one.

Then, it is determined in step S184 whether or not an operation for executing the command variable cmd was performed. If its result is YES, it is determined in step S185 whether or not the command variable cmd is "ADD." If its result is YES, the flow goes to an addition procedure described later. It is determined in step S186 whether or not the command variable cmd is "MOVE." If its result is YES, the flow goes to a move procedure described later. Further, it is determined in step S187 whether or not the command variable cmd is "DELETE." If its result is YES, the flow goes to a deletion procedure described later.

If a result of step S184 is No, the flow goes to step S188 in which it is determined whether or not NEW ALBUM CREATION or ALBUM EDITION is completed. If its result is NO, the flow returns to step S168 of Fig. 15 to update the display of the album creation operation screen. In contrast, if a result of step S188 of Fig. 16 is YES, the flow goes to an album setting procedure described later.

### File addition

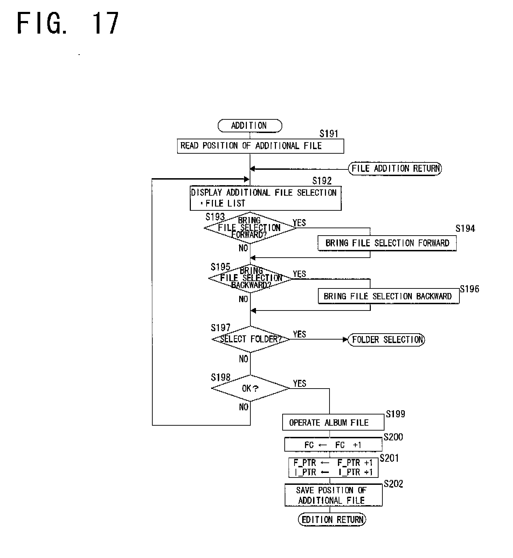

In the file addition procedure, the position of an additional file is read in step S191 of Fig. 17, and an additional file selection screen containing a file list (see Fig. 24(f)) is displayed in step S192.

Then, it is determined in step S193 whether or not an operation for bringing file selection forward was performed. If its result is YES, a selection mark is brought forward in step S194. Next, it is determined in step S195 whether or not an operation for bringing file selection backward was performed. If its result is YES, a selection mark is brought backward in step S196. The move is performed in this way under the same condition as that in the playback mode.

Next, it is determined in step S197 whether or not an operation for folder selection was performed. If its result is YES, the flow goes to a folder selection procedure described later.

If a result of step S197 is NO, it is determined in step S198 whether or not an operation for accepting the selected file was performed. If its result is NO, the flow returns to step S192 so that the additional file selection screen continues to be displayed.

In contrast, if a result of step S198 is YES, the flow goes to step S199 in which the album file is operated to add the selected file to the position of the insert pointer I_PTR.

Next, the file counter FC is counted up by one in step S200, and the file pointer F_PTR and the insert pointer I_PTR are each counted up by one in step S201. The pointers are thereby incremented according to the additional file.

Then, the position of the additional file is saved in step S202, and the flow thereafter returns to step S167 of Fig. 15.

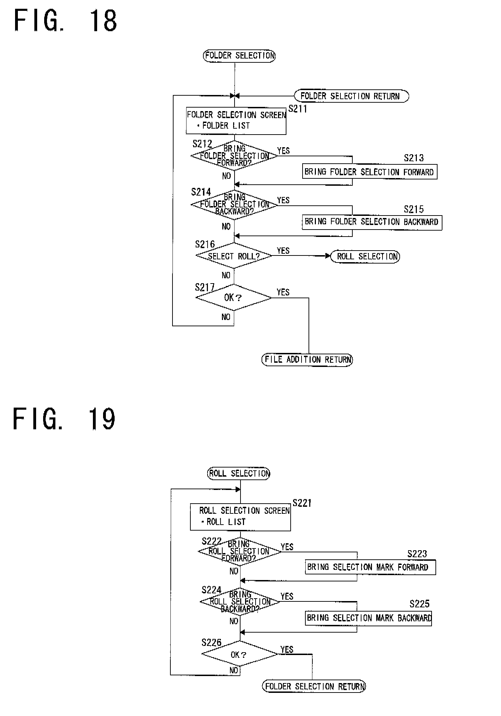

In the folder selection procedure, as shown in Fig. 18, a folder selection screen containing a folder list (see Fig. 24(g)) is displayed in step S211.

Then, it is determined in step S212 whether or not an operation for bringing folder selection forward was performed. If its result is YES, a selection mark is brought forward in step S213. Next, it is determined in step S214 whether or not an operation for bringing folder selection backward was performed. If its result is YES, a selection mark is brought backward in step S215. It is also determined in step S216 whether or not an operation for roll selection was performed. If its result is YES, the flow goes to a roll selection procedure described later.

If a result of step S216 is No, it is determined in step S217 whether or not an operation for accepting the selected folder was performed. If its result is NO, the flow returns to step S211 so that the folder selection screen continues to be displayed. In contrast, if a result of step S217 is YES, the flow returns to step S192 of Fig. 17 to display the additional file selection screen.

In the roll selection procedure, a roll selection screen containing a roll list (see Fig. 24(h)) is displayed in step S221 of Fig 19. Then, it is determined in step S222 whether or not an operation for bringing roll selection forward was performed. If its result is YES, a selection mark is brought forward in step S223. Next, it is determined in step S224 whether or not an operation for bringing roll selection backward was performed. If its result is YES, a selection mark is brought backward in step S225.

Next, it is determined in step S226 whether or not an operation for accepting the selected roll was performed. If its result is NO, the flow returns to step S221 so that the roll selection screen continues to be displayed. If a result of step S226 is YES, the flow returns to step S211 of Fig. 18 to display the folder selection screen.

### File Move

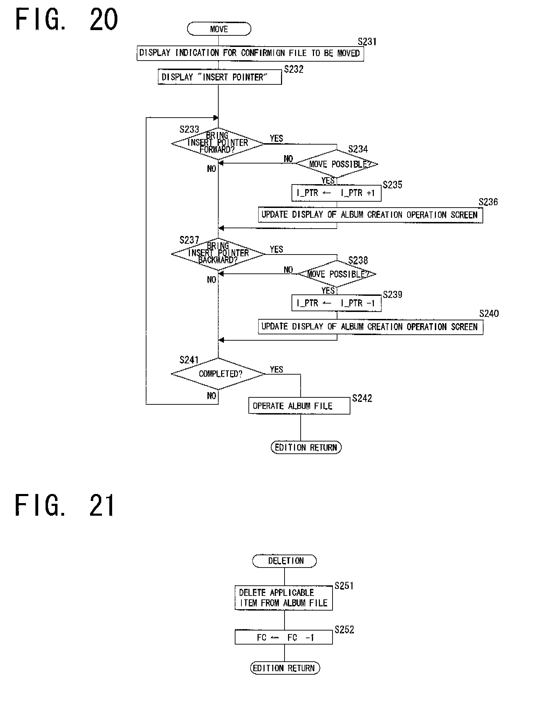

In the file move procedure, an indication for confirming a file to be moved is displayed in step S231 of Fig. 20, and thereafter, an "insert pointer" (see Fig. 24(j)) is displayed in step S232.

Next, it is determined in step S233 whether or not an operation for bringing the insert pointer forward was performed. If its result is YES, it is determined in step S234 whether or not the insert pointer can be moved. If its result is YES, the insert pointer I_PTR is counted up by one in step S235, and the display of the album creation operation screen is updated in step S236.

Next, it is determined in step S237 whether or not an operation for bringing the insert pointer backward was performed. If its result is YES, it is determined in step S238 whether or not the insert pointer can be moved. If its result is YES, the insert pointer I_PTR is counted down by one in step S239, and the display of the album creation operation screen is updated in step S240.

Then, it is determined in step S241 whether or not specification of a location to which the file is to be moved is completed. If its result is NO, the flow returns to step S233 to continue the move of the insert pointer. In contrast, if a result of step S241 is YES, the flow goes to step S242 in which the album file is operated and the file to be moved is moved to the position of the insert pointer I_PTR. Then, the flow returns to step S167 of Fig. 15.

### File deletion

In the album deletion procedure, an applicable item is deleted from the album file in step S251 of Fig. 21, the file counter FC is counted down by one in step S252, and the flow thereafter returns to step S167 of Fig. 15.

### Album setting

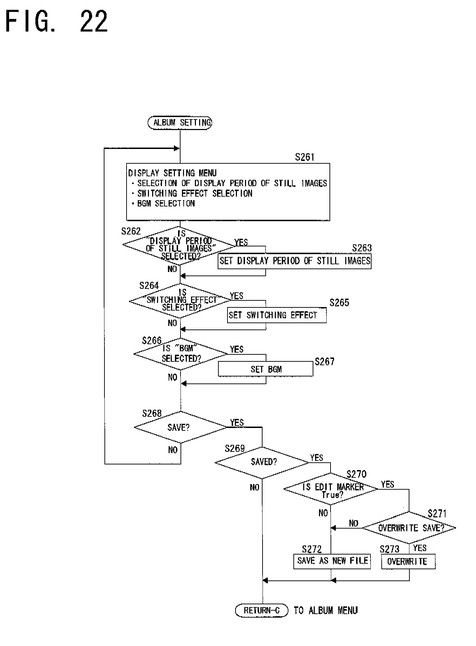

In the album setting procedure, an album setting menu including selection of display period of still images, selection of switching effect, selection of BGM and the like is displayed in step S261 of Fig. 22.

Then, it is determined in step S262 whether or not "DISPLAY PERIOD OF STILL IMAGES" was selected. If its result is YES, the flow goes to step S263 to set the display period of still images. Next, it is determined in step S264 whether or not "SWITCHING EFFECT" was selected. If its result is YES, the flow goes to step S265 to set switching effect. It is also determined in step S266 whether or not "BGM" was selected. If its result is YES, the flow goes to step S267 to set BGM.

Next, it is determined in step S268 whether or not an operation for saving the album setting was performed. If its result is NO, the flow returns to step S261 so that the setting menu continues to be displayed. If a result of step S268 is YES, it is further determined in step S269 whether or not the album setting was saved. If its result is NO, the flow returns to step S141 of Fig. 13 to repeat the procedures on the album menu.

In contrast, if a result of step S269 is YES, the flow goes to step S270 in which it is determined whether or not an edit marker is "True." If its result is NO, it is judged that a newly created album is being processed. Then, the new album is saved in step S272, and the flow thereafter returns to step S141 of Fig. 13 to repeat the procedures on the album menu.

In contrast, if a result of step S270 of Fig. 22 is YES, it is judged that the already existing album is being edited. Then, it is further determined in step S271 whether or not the album is to be overwritten. If its result is No, the flow goes to step S272 to perform a newly save. If its result is YES, the flow goes to step S273 to overwrite the album. Thereafter the flow returns to step S141 of Fig. 13 to repeat the procedures on the album menu.

Fig. 24 shows transitions of a series of display screens in response to operation when "ALBUM" is selected from "DATA TRANSMISSION," "PLAYBACK," and "ALBUM" on the main menu.

When "ALBUM" is selected from the main menu including "DATA TRANSMISSION," "PLAYBACK," and "ALBUM" on the main menu shown in Fig. 24(a), a selection screen of an album file to be played back is displayed as shown in (b). By selecting one album file therefrom, and by operating a "SET KEY", the selected album file can be played back. In contrast, by selecting one album file therefrom, and by selecting ALBUM EDITION, the selected album file is displayed in a box in dashed lines as shown in (d). If the selection is conformed, selection buttons "ADD," "MOVE," and "DELETE" appear as shown in (e).

If "ADD" is selected, an insert pointer indicating an insertion position of a file appears in the form of a triangular mark. After the insertion position is determined by a key operation, a file to be added can be designated while switching is made among the file selection screen shown in (f), the folder selection screen shown in (g), and the roll selection screen shown in (h).

After one file is selected from the file selection screen of (f), the screen of (e) is displayed again. Then, the selected file is inserted into the position of the insert pointer, by which the file is added.

If "MOVE" is selected on the screen of (e), a file to be moved is displayed in a box in bold lines as shown in (i). When the file to be moved is selected, the selected file is indicated by a file pointer (box in dashed lines) as shown in (j), and the thumbnail image of the selected file is displayed at all times on the screen. At the same time, an insert pointer (triangular mark) for designating a destination is displayed.

Then, the insert pointer is moved to designate the destination. If a file to be moved disappears from the screen as a result of scrolling in this process, the thumbnail of the file to be moved is displayed on the screen, so that no inconvenience is caused.

After the destination of the file is designated, a sequence of files including the file to be moved that has been moved to the destination is displayed as shown in (k).

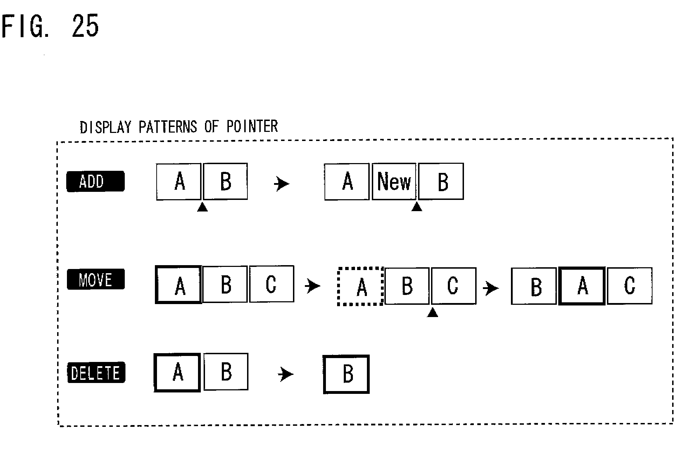

Fig. 25 shows how a file is added and moved using the pointers described above. When a file is to be added, an insert pointer in the form of a triangular mark appears, and a new file "New" is inserted into the position of the insert pointer.

When a file is to be moved, a file "A" selected as a file to be moved is identified by a pointer in the form of a box in bold lines. When the file to be moved is confirmed, the file is identified by a file pointer in the form of a box in dashed lines. Then, the file identified by the file pointer is moved to the position of an insert pointer in the form of a triangular mark.

The addition and the move of a file described above are realized by exiting a link file, and a file and a position can be selected among folders or rolls. Thus, a file can freely be added to a file list of files to be played back, or moved.

According to the digital camera described above, the file to be added or the file selected as movement object is added or moved to the position indicated by the insert pointer of triangular mark. Therefore, it is easy to understand visually for the user.

when a file is to be deleted, file selected as a file to be deleted is identified by a pointer in the form of a box in bold lines. The file identified by the pointer is removed from the file list by executing deletion. However, the file itself is not deleted.

In the explanation of the album mode described above, the image file recorded in the external hard disk device 3 is the object of the album preparation. However, it is not limited to the external hard disk device 3, and it may be the image file recorded in the external memory card 16 removably connected to the digital camera body 1. Also, although not shown in this embodiment, it may be the image file recorded in a memory built in the digital camera body 1.

Also, in the explanation of the album mode described above, selection operation such as the selection of the main menu, the album file or the like, and the fixing operation of fixing the selection are performed by operating "SET KEY" of the operation part 30 or the like. However, it is also possible to adopt a touch panel as an operation part.

In the case where the touch panel is adopted, in particular, when "ALBUM" is to be selected from "DATA TRANSMISSION", "PLAYBACK", and "ALBUM" as shown in FIG. 24(a), it is selected by touching the "ALBUM" item with a finger. In a similar manner, when the album file is to be selected by the thumbnail as shown in FIG. 24(b), it is selected by touching the thumbnail of the desired album with a finger. In a similar manner, when the album is to be edited as shown in FIG. 24(i), the object image to be moved is selected by touching the image with a finger, and the file pointer is displayed. Also, when selecting the insert pointer in designating the movement destination as shown in FIG. 24(j), the insert pointer is disposed between every adjacent images, and the movement destination is designated by touching the insert pointer corresponding to the desired movement destination.

Also, the embodiment shown in Fig. 1 employs a structure in which the cradle 2 is connected to the camera body 1. Alternatively, the USB device connector 27, the USB host connector 28 and the AV connector 29 of the cradle 2 may be provided in the camera body 1, so that the cradle 2 can be omitted.

Besides, the external memory card 16 such as an SD card is employed as an external memory, and the external hard disk drive 3 is employed as an external storage device, to which the present invention is not intended to be confined. Various types of known external memories and external storage devices may be employed.

### BRIEF DESCRIPTION OF THE DRAWING

[FIG. 1] Fig. 1 is a block diagram showing the structure of a digital camera according to the present invention;
[FIG. 2] Fig. 2 is a flow chart for explaining the basic flow of a control procedure performed by a CPU of a camera body;
[FIG. 3] Fig. 3 is a flow chart for explaining a processing flow in a transmission mode in the control procedure;
[FIG. 4] Fig. 4 is a flow chart for explaining a transmission execution procedure in the transmission mode;
[FIG. 5] Fig. 5 is a flow chart for explaining a transmission execution procedure in the opposite direction in the transmission mode;
[FIG. 6] Fig. 6 is a flow chart for explaining a transmission direction setting procedure in the transmission mode;
[FIG. 7] Fig. 7 is a flow chart for explaining an information display procedure in the transmission mode;
[FIG. 8] Fig. 8 is a flow chart for explaining a post-transmission deletion setting procedure in the transmission mode;
[FIG. 9] Fig. 9 is a flow chart for explaining a processing flow in a playback mode in the control procedure;
[FIG. 10] Fig. 10 is a flow chart for explaining a roll playback procedure in the playback mode;
[FIG. 11] Fig. 11 is a flow chart for explaining a view selection procedure in the playback mode;
[FIG. 12] Fig. 12 is a flow chart for explaining a folder selection procedure in the playback mode;
[FIG. 13] Fig. 13 is a flow chart for explaining a processing flow in an album mode;
[FIG. 14] Fig. 14 is a flow chart for explaining an album playback procedure in the album mode;
[FIG. 15] Fig. 15 is a flow chart for explaining the first halves of a new album creation procedure and an album edition procedure in the album mode;
[FIG. 16] Fig. 16 is a flow chart for explaining the latter halves of the new album creation procedure and the album edition procedure in the album mode;
[FIG. 17] Fig. 17 is a flow chart for explaining a file addition procedure;
[FIG. 18] Fig. 18 is a flow chart for explaining a folder selection procedure;
[FIG. 19] Fig. 19 is a flow chart for explaining a roll selection procedure;
[FIG. 20] Fig. 20 is a flow chart for explaining a file move procedure;
[FIG. 21] Fig. 21 is a flow chart for explaining a file deletion procedure;
[FIG. 22] Fig. 22 is a flow chart for explaining an album setting procedure;
[FIG. 23] Fig. 23 shows transitions of display screens in the playback mode;
[FIG. 24] Fig. 24 shows transitions of display screens in the album mode;
[FIG. 25] Fig. 25 shows the display patterns of pointers used in addition, move and deletion of a file;
[FIG. 26] Fig. 26 shows a directory structure formed in an external memory card;
[FIG. 27] Fig. 27 shows a directory structure formed in an external hard disk drive; and

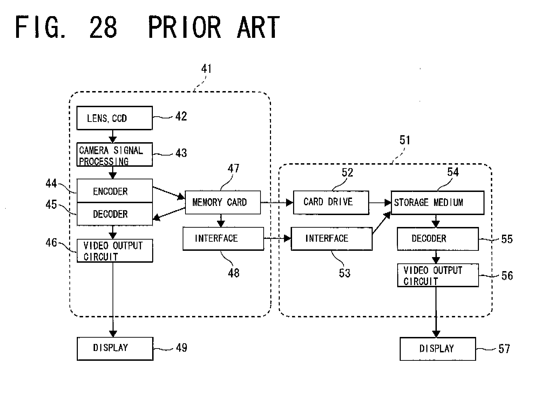

[FIG. 28] Fig. 28 is a block diagram showing the conventional structures of a camera body and a storage device.

### EXPLANATION OF REFERENCES

- 1: camera body
- 14: memory controller
- 15: card drive
- 16: external memory card
- 17: USB interface
- 18: USB device controller
- 19: USB host controller
- 31: CPU
- 33: bus
- 2: cradle
- 27: USB device connector
- 28: USB host connector
- 29: AV connector
- 3: external hard disk drive
- 4: monitor television receiver
- 5: speaker

## Claims

1. An image processing device comprising:
playback means configured to play back in a predetermined order a plurality of image information pieces selected from a plurality of image information pieces recorded in a recording medium;
image displaying means configured to display played back images corresponding to the image information pieces played back by the playback means in an arrangement corresponding to the predetermined order;
additional image selecting means configured to arbitrarily select an additional played back image to be added to the plurality of played back images displayed by the image displaying means from the image information pieces recorded in the recording medium; and
designating means configured to dispose a pointer displaceably to a position between arbitrary two adjacent played back images of the plurality of played back images displayed by the image displaying means and designating an adding position of the additional played back image by a position of the pointer.

2. An image processing device comprising:
playback means configured to play back in a predetermined order a plurality of image information pieces selected from a plurality of image information pieces recorded in a recording medium,
image displaying means configured to display played back images corresponding to the image information pieces played back by the playback means in an arrangement corresponding to the predetermined order,
image selecting means configured to select a displacement object played back image which is an object of change of displaying position of the plurality of played back images displayed by the image displaying means, and
designating means configured to dispose a pointer displaceably to a position between arbitrary two adjacent played back images of the plurality of played back images displayed by the image displaying means and designating a movement destination of the displacement object played back image by a position of the pointer.

3. The image processing device according to claim 1 or 2, wherein the image processing device further comprises inputting means configured to input an image information piece, and recording means configured to record the image information piece inputted by the inputting means in the recording medium.

4. The image processing device according to any one of claims 1 to 3, wherein the recording medium is a removable external recording medium.

5. An image processing system wherein the image processing device according to claim 4 and, the external recording medium are connected to each other via an interface, and the image information piece is transmitted from the image processing device to the external recording medium via the interface.
